# EUROPÄISCHE PATENTSCHRIFT

(11) **EP 3 900 521 B1**
(45) Veröffentlichungstag und Bekanntmachung des Hinweises auf die Patenterteilung: **10.05.2023**
(21) Anmeldenummer: 20171251.0
(22) Anmeldetag: 24.04.2020
(51) Int. Cl.: A01G 13/02

(54) **SCHUTZEINRICHTUNG FÜR TERMINALTRIEBE VON BÄUME**
PROTECTIVE DEVICE FOR TERMINAL SHOOTS OF TREES
DISPOSITIF DE PROTECTION DE POUSSES TERMINALES D'ARBRES

(43) Veröffentlichungstag der Anmeldung: 27.10.2021
(73) Patentinhaber: Latschbacher GmbH, 4484 Kronstorf (AT)
(72) Erfinder: Latschbacher, Klaus, 4484 Kronstorf (AT)
(74) Vertreter: Patentanwälte Magenbauer & Kollegen Partnerschaft mbB

(56) Entgegenhaltungen:
- WO-A1-2020/043446
- DE-U1-202014 002 030
- KR-Y1- 200 464 532

## Beschreibung

Die Erfindung betrifft eine Schutzeinrichtung für Terminaltriebe von Bäumen, mit einem streifenförmigen Grundkörper, der für eine elastische Verformung zwischen einer flächig ausgedehnten Grundstellung und einer gekrümmten Funktionsstellung ausgebildet ist, wobei der Grundkörper eine Vorderseite und eine der Vorderseite abgewandte Rückseite aufweist und an der Vorderseite eine erste Funktionsfläche ausgebildet ist, bei der entlang einer längsten Körperachse des Grundkörpers ein erster Endbereich mit einer Verschlussanordnung, ein Kontaktbereich mit einer Vielzahl von flexiblen Borsten und ein zweiter Endbereich mit einer Aufnahmeanordnung zur Verriegelung mit der Verschlussanordnung vorgesehen sind.

Aus der DE 20 2008 014 669 U1 ist eine gattungsbildende Vogelschutzmanschette bekannt.

Aus der KR 200 464 532 Y1 ist ein bandförmiges Schutzelement mit einem Clip-Verschluss bekannt, das dazu bestimmt ist, die Spitze eines Nadelbaums zu schützen. In der Mitte des Schutzelements sind dünne Vorsprünge ausgebildet, um junge Zweige nicht zu beschädigen. Ferner sind vertikal geformte Schutzstangen vorgesehen, die im Spritzguss-Herstellungsverfahren einstückig mit dem Schutzelement ausgebildet werden.

Die WO 2020/043446 A1 offenbart eine Schutzeinrichtung für Pflanzen, die ein selbsttragendes Folienelement umfasst, das auf sich selbst zu schließen ist, um eine Pflanze zu umgeben und mit Öffnungen für die Belüftung der Pflanze versehen ist.

Die Aufgabe der Erfindung besteht darin, eine Schutzeinrichtung mit verbesserter Handhabung und Wirksamkeit zur Verfügung zu stellen.

Diese Aufgabe wird für eine Schutzeinrichtung der eingangs genannten Art mit den Merkmalen des Anspruchs 1 gelöst.

Hierbei ist vorgesehen, dass die Verschlussanordnung ein erstes Verschlussmittel und ein davon beanstandet angeordnetes zweites Verschlussmittel umfasst und dass die Aufnahmeanordnung eine erste Aufnahme für das erste Verschlussmittel und eine zweite Aufnahme für das zweite Verschlussmittel aufweist

Für eine Anbringung der Schutzeinrichtung an einem Baum, insbesondere an einem Terminaltrieb eines Nadelbaums, ist vorgesehen, dass ein Benutzer den streifenförmigen, insbesondere zumindest weitgehend rechteckigen, Grundkörper zunächst aus der flächig ausgedehnten Grundstellung durch Krümmung der zunächst geraden längsten Körperachse des Grundkörpers in eine U-förmig gekrümmte Zwischenstellung bringt. Hierzu kann die Schutzeinrichtung beispielsweise zwischen dem Zeigefinger und dem Daumen aufgenommen werden, wobei die an der Vorderseite im Kontaktbereich ausgebildeten Borsten nach innen gewandt sind. Anschließend wird die Schutzeinrichtung auf den zu schützenden Ast oder Terminaltrieb, beispielsweise die senkrecht nach oben weisende Spitze eines Nadelbaums, aufgeschoben oder von der Seite daran angenähert, dass der U-förmig deformierte Grundkörper den Ast oder Terminaltrieb umgibt. Durch Annäherung des Daumens und des Zeigefingers wird der Grundkörper weiter elastisch, gegebenenfalls mit einem gewissen plastischen Deformationsanteil, deformiert, bis es aufgrund der Wechselwirkung zwischen der Verschlussanordnung und der Aufnahmeanordnung zu einer Verriegelung der beiden Endbereiche der Vorderseite kommt, die nunmehr gegenüberliegend zueinander angeordnet sind. Damit nimmt der Grundkörper die Funktionsstellung ein, wobei die Schutzeinrichtung eine Schlaufe um den Ast oder Terminaltrieb des zu schützenden Baums bildet.

Durch die Ausgestaltung der Verschlussanordnung mit einem ersten Verschlussmittel und einem zweiten Verschlussmittel sowie die korrespondierende Ausgestaltung der Aufnahmeanordnung mit einer ersten Aufnahme und einer zweiten Aufnahme für das jeweilige Verschlussmittel kann eine besonders zuverlässige Verriegelung der beiden Endbereiche des Grundkörpers gewährleistet werden. Um eine vorteilhafte Nutzung der Schutzeinrichtung zu gewährleisten, sind die ersten und zweiten Verschlussmittel und die ersten und zweiten Aufnahmen derart aufeinander abgestimmt, dass eine werkzeuglose und einhändige Bedienung der Schutzeinrichtung sowohl beim anbringen als auch beim Entfernen der Schutzeinrichtung ermöglicht wird.

Ergänzend kann vorgesehen sein, dass die Schutzeinrichtung an der Rückseite des Grundkörpers eine zweite Funktionsfläche aufweist, die mit formstabilen Stäben, insbesondere mit endseitig angespitzten Stacheln, versehen ist. Diese Stäbe, die in einer normal zur zweiten Funktionsfläche ausgerichteten Erstreckungsrichtung abragen, dienen zur Abwehr von Wildverbiss, beispielsweise durch Rotwild, da dieses aufgrund der formstabilen Stäbe davon abgehalten wird, die empfindlichen Astspitzen, insbesondere Terminaltriebe, abzubeißen. Eine besonders vorteilhafte Schutzwirkung ergibt sich, wenn die formstabilen Stäbe in der Art von endseitig angespitzten Stacheln ausgebildet sind.

Erfindungsgemäß ist vorgesehen, dass am Grundkörper, insbesondere ausschließlich längs des Kontaktbereichs, wenigstens zwei Stützstäbe angebracht sind, die jeweils entlang einer parallel zur Vorderseite ausgerichteten Erstreckungsachse, insbesondere quer zur längsten Körperachse des Grundkörpers, erstreckt sind. Die Aufgabe der Stützstäbe besteht darin, eine Schutzfunktion durch die Schutzeinrichtung auch abseits des Grundkörpers zu gewährleisten. Durch die Stützstäbe kann zum einen verhindert werden, dass Vögel den zu schützenden Abschnitt des Baums anfliegen und dabei beispielsweise des Terminaltrieb abbrechen, zum anderen dienen die Stützstäbe auch als zusätzliche Abwehr von Wildverbiss. Bevorzugt ist vorgesehen, dass beidseits des Grundkörpers jeweils Stützstäbe angeordnet sind, um sowohl die Funktion der Vogelabwehr als auch die Schutzwirkung vor Wildverbiss gewährleisten zu können. Die Stützstäbe können eine Erstreckung aufweisen, die einem 2-fachen bis 6-fachen einer Breite des Grundkörpers entspricht. Beispielhaft ist vorgesehen, dass die Stützstäbe zumindest teilweise endseitig angespitzt sind, um die Schutzwirkung zu erhöhen.

Ferner ist erfindungsgemäß vorgesehen, dass die Stützstäbe mehrere jeweils quer zur Erstreckungsachse ausgerichtete und längs der Erstreckungsachse, insbesondere in konstanter Teilung angeordnete, Ausnehmungen aufweisen, um eine materialsparende Gestaltung der Stützstäbe zu ermöglichen.

Vorteilhaft ist es, wenn die formstabilen Stäbe, insbesondere ausschließlich, angrenzend an eine erste Verbindungsfläche, die zwischen der Vorderseite und der Rückseite des Grundkörpers erstreckt ist, angeordnet sind. Durch diese randseitige Anordnung der Stützstäbe kann die Herstellung der Schutzeinrichtung, die vorzugsweise im Kunststoffspritzgussverfahren erfolgt, gegenüber einer beidseitigen Anbringung von formstabilen Stäben optimiert werden, da ein Auswurf der fertigen Schutzvorrichtungen aus der Spritzgussform zumindest für den Fall vereinfacht wird, dass die formstabilen Stäbe quer zur Trennebene der Spritzgussform ausgerichtet sind. Ferner ist bei einer einseitigen Anordnung der formstabilen Stäbe gegenüber einer beidseitigen Anordnung von formstabilen Stäben auch eine Bedienung der Schutzeinrichtung vereinfacht, da die Schutzeinrichtung in diesem Fall für den Anbringungsvorgang am zu schützenden Baum in der Daumenbeuge zwischen Daumen und Zeigefinger aufgenommen werden kann und die formstabilen Stäbe oberhalb des Daumens bzw. Zeigefinger zu liegen kommen.

Bei einer Weiterbildung der Erfindung ist vorgesehen, dass wenigstens einer der formstabilen Stäbe einstückig mit einem der Stützstäbe ausgebildet ist. Hierdurch wird vermieden, dass die formstabilen Stäbe und die Stützstäbe die Flexibilität des Grundkörpers beeinträchtigen. Vielmehr sind jeweils ein formstabiler Stab und ein Stützstab kombiniert, so dass eine lokale Verringerung der Flexibilität des Grundkörpers nur durch die Stützstäbe, nicht jedoch durch die formstabilen Stäbe hervorgerufen wird.

In weiterer Ausgestaltung der Erfindung ist vorgesehen, dass die Borsten einen ersten Zylinderabschnitt mit einem ersten Durchmesser und einer ersten Längenerstreckung und einen daran angrenzenden zweiten Zylinderabschnitt mit einem zweiten Durchmesser und einer ersten zweiten Längenerstreckung aufweisen, wobei der zweite Durchmesser weniger als 60 Prozent des ersten Durchmessers beträgt und/oder wobei die erste Längenerstreckung und die zweite Längenerstreckung jeweils wenigstens das 3-fache des zweiten Durchmessers betragen. Mit einer derartigen Gestaltung der Borsten wird einerseits eine kostengünstige Herstellung der Spritzgussform ermöglicht, sofern die Schutzeinrichtung im Kunststoffspritzgussverfahren hergestellt werden soll, da die Geometrie der Borsten durch eine kreiszylindrische Stufenbohrung verwirklicht werden kann. Ferner wird durch die abgestufte Ausgestaltung der Borsten ein hochflexibler Kontaktbereich zwischen den zweiten Zylinderabschnitten und dem Baum verwirklicht, während die ersten Zylinderabschnitte nötigenfalls die erforderliche Stabilität bereitstellen, die für eine zuverlässige Anbringung der Schutzeinrichtung am Baum erforderlich ist.

Zweckmäßig ist es, wenn das erste Verschlussmittel und das zweite Verschlussmittel gleichartig ausgebildet sind und wenn die Aufnahmeanordnung mehrere gleichartig ausgebildete und mit einheitlicher Teilung entlang der längsten Körperachse des Grundkörpers angeordnete Aufnahmen umfasst, die wahlweise als erste Aufnahme oder als zweite Aufnahme dienen können. Hierdurch wird eine vom Benutzer vorzugebende Größeneinstellung für die Schutzeinrichtung ermöglicht, da der Benutzer durch eine Verlagerung des ersten Endbereichs gegenüber dem zweiten Endbereich des Grundkörpers einen Durchmesser der Schlaufe, die bei der Verriegelung der Verschlussanordnung mit der Aufnahmeanordnung gebildet wird, in Abhängigkeit vom jeweiligen Einsatzfall auswählen kann.

Bei einer vorteilhaften Weiterbildung der Erfindung ist vorgesehen, dass die Aufnahmen als Ausnehmungen ausgebildet sind, die den Grundkörper ausgehend von der Vorderseite bis zur Rückseite durchsetzen und dass das erste Verschlussmittel und das zweite Verschlussmittel in einer parallel zur Rückseite ausgerichteten Projektionsebene jeweils eine Riegelprofilierung aufweisen, die in wenigstens einer Richtung in der Projektionsebene größer als eine Aufnahmeprofilierung der Ausnehmung ausgebildet ist, um eine formschlüssige Verbindung mit der jeweiligen Aufnahme zu bilden. Für den Verriegelungsvorgang zwischen dem jeweiligen Verschlussmittel und der Aufnahme ist vorgesehen, dass das Verschlussmittel und/oder die Aufnahme zeitweilig elastisch deformiert werden, so dass das Verschlussmittel durch die Ausnehmung der Aufnahme hindurchgeführt werden kann und durch die anschließende elastische Rückdeformation die gewünschte Verriegelung zwischen den Verschlussmittel und der Aufnahme gewährleistet ist. Vorzugsweise ist vorgesehen, dass das Verschlussmittel endseitig an einem Trägerzapfen angebracht ist, der seinerseits an dem ersten Endbereich des Grundkörpers festgelegt ist und der verglichen mit dem Verschlussmittel in der Projektionsebene eine kleinere Profilierung als die Riegelprofilierung aufweist.

Bevorzugt ist vorgesehen, dass an der Rückseite des Grundkörpers benachbart zu den Aufnahmen wenigstens eine leistenförmige, vorzugsweise längs der längsten Körperachse des Grundkörpers erstreckte Verstärkung ausgebildet ist. Mit dieser Verstärkung wird einerseits eine erleichterte Bedienung der Schutzeinrichtung während des Anbringungsvorgangs am Baum sichergestellt, da der Grundkörper im Bereich der Aufnahmen aufgrund der Verstärkung eine reduzierte Flexibilität aufweist und somit keine unerwünschten Ausweichbewegungen vollzieht. Zusätzlich dient die Verstärkung dem Schutz der Verschlussmittel, so dass für den Fall von Manipulationen an der Schutzeinrichtung durch Wildtiere die Wahrscheinlichkeit eines Entfernens der Schutzeinrichtung reduziert werden kann.

Vorteilhaft ist es, wenn der Grundkörper im Kontaktbereich eine Vielzahl von Ausnehmungen aufweist, die sich von der Vorderseite zur Rückseite erstrecken. Durch diese Ausnehmungen wird eine vorteilhafte Beleuchtung und Belüftung des Baums, insbesondere des Terminaltriebs, im Bereich des Grundkörpers der Schutzeinrichtung gewährleistet.

Nachfolgend wird die Erfindung anhand der beiliegenden Zeichnung näher erläutert dieser zeigen
- Figur 1: eine perspektivische Darstellung auf eine Rückseite einer ersten Ausführungsform einer Schutzeinrichtung, die nicht erfindungsgemäß ist und der Veranschaulichung dient,
- Figur 2: eine perspektivische Darstellung auf eine Vorderseite einer zweiten Ausführungsform einer Schutzeinrichtung, die nicht erfindungsgemäß ist und der Veranschaulichung dient,
- Figur 3: eine Draufsicht auf eine Rückseite einer erfindungsgemäßen, dritten Ausführungsform einer Schutzeinrichtung,
- Figur 4: eine Vorderansicht auf die Schutzeinrichtung gemäß der Figur 3, und
- Figur 5: eine Detaildarstellung einer alternativen Ausführungsform für eine Verschlussanordnung.

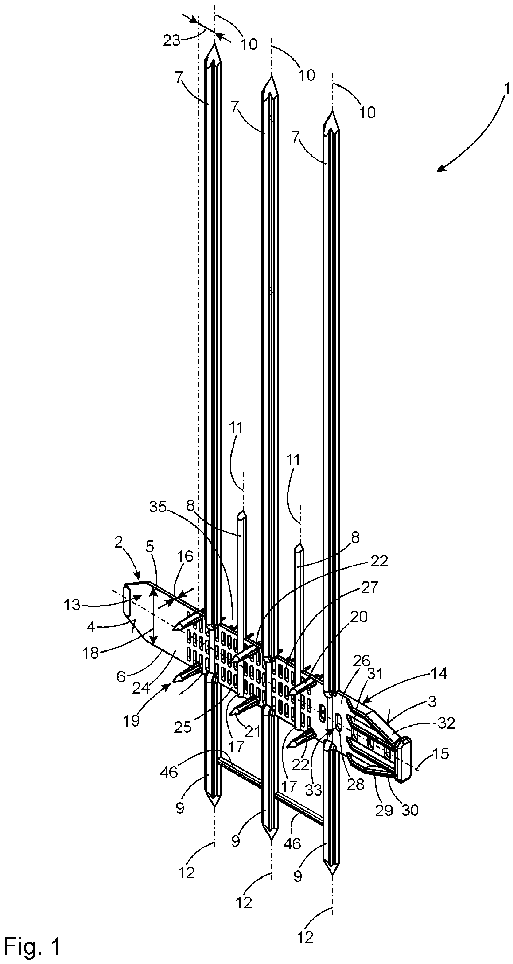

Ein in der Figur 1 gezeigtes erstes Ausführungsbeispiel einer Schutzeinrichtung 1, die nicht erfindungsgemäß ist und der Veranschaulichung dient, umfasst einen streifenförmigen, in der Art eines Bandabschnitts ausgeführten Grundkörper 2. Für die nachstehende Beschreibung der Schutzeinrichtung 1 wird die Geometrie des Grundkörpers 2 in der dargestellten flächig ausgedehnten Grundstellung als im Wesentlichen quaderförmig angesehen. Der Grundkörper 2 weist eine in der Figur 1 den Betrachter abgewandte Vorderseite 3, eine in der Figur 1 gut sichtbare Rückseite 4, eine gemäß der Darstellung der Figur 1 in vertikaler Richtung nach oben gerichtete obere Stirnfläche 5, die auch als erste Verbindungsfläche bezeichnet wird, und eine gemäß der Darstellung der Figur 1 in vertikaler Richtung nach unten gerichtete untere Stirnfläche 6, die auch als zweite Verbindungsfläche bezeichnet wird, auf.

Ausgehend von der oberen Stirnfläche 5 sind an der Schutzeinrichtung 1 gemäß der Figur 1 erste Stützstäbe 7 und optional vorzusehende zweite Stützstäbe 8 angebracht. Ferner sind ausgehend von der unteren Stirnfläche 6 dritte Stützstäbe 9 angebracht. Beispielhaft sind Erstreckungsachsen 10, 11 und 12 der ersten, zweiten und dritten Stützstäbe 7, 8 und 9 jeweils parallel zur Rückseite 4 ausgerichtet. Ferner ist rein exemplarisch vorgesehen, dass die Erstreckungsachsen 10, 11 und 12 parallel zueinander ausgerichtet sind. Darüber hinaus ist ebenfalls nur beispielhaft vorgesehen, dass die Erstreckungsachsen 10 der ersten Stützstäbe 7 und die Erstreckungsachsen 12 der dritten Stützstäbe 9 koaxial zueinander ausgerichtet sind.

Die ersten Stützstäbe 7 und die dritten Stützstäbe 9 weisen in einer nicht eingezeichneten, quer zu den jeweiligen Erstreckungsachsen 10 und 12 ausgerichteten Querschnittsebene eine T-förmige Profilierung auf. Eine Erstreckung der ersten Stützstäbe 7 und der dritten Stützstäbe 9 in der Querschnittsebene beträgt sowohl in Richtung einer längsten Körperachse 15 des Grundkörpers 2 als auch in einer Richtung quer zur längsten Körperachse 15 ungefähr ein 3-faches bis 5-faches eines Abstands 16 zwischen der Vorderseite 3 und der Rückseite 4 des Grundkörpers 2, wodurch eine formstabile Ausgestaltung der ersten und dritten Stützstäbe 7, 9 gewährleistet ist. Rein exemplarisch ist vorgesehen, dass benachbart angeordnete dritte Stützstäbe 9 mit quer zu den Erstreckungsachsen 12 ausgerichteten Verbindungsstreben 46 verbunden sind, die in der Funktionsstellung der Schutzeinrichtung 1 ein Verbiegen der dritten Stützstäbe 9 bei einem Auftreten von Querkräften verhindern und damit zu einer Stabilisierung der Schutzeinrichtung 1 beitragen.

Die optional vorzusehenden zweiten Stützstäbe 8 weisen in einer nicht eingezeichneten, quer zur Erstreckungsachse 9 ausgerichteten Querschnittsebene eine zumindest im Wesentlichen quadratische Profilierung mit einer Kantenlänge auf, die in etwa dem Abstand 16 entspricht. Rein exemplarisch ist vorgesehen, dass die zweiten Stützstäbe 8 eine leicht gewölbte Rückseite 17 aufweisen und sich über die gesamte Breite 18 des Grundkörpers 2 erstrecken.

Ferner sind jeweils benachbart zu den ersten Stützstäbe 7 bzw. den dritten Stützstäben 9 am äußeren Rand der Rückseite 4 jeweils dornartig ausgebildete formstabile Stäbe 19 ausgebildet, die quer zur Rückseite 4 ausgerichtet sind und die jeweils endseitig spitz zulaufend ausgebildet sind. Rein exemplarisch sind die formstabilen Stäbe 19 alle gleichartig ausgeführt und weisen einen kreiszylindrischen Zapfenkörper 20, eine kegelförmige Spitze 21 sowie jeweils drei um jeweils 90 Grad versetzt in radialer Richtung vom Zapfenkörper 20 abragende, dreiecksförmig ausgebildete Stabilisierungen 22 auf. Beispielhaft ist vorgesehen, dass die formstabilen Stäbe 19 in Richtung der längsten Körperachse jeweils um den gleichen Abstand 23 von den benachbart angeordneten ersten Stützstäben 7 und dritten Stützstäben 9 entfernt sind.

Die Vorderseite 3 und die Rückseite 4 des Grundkörpers 2 bilden eine erste Funktionsfläche 13 bzw. eine zweite Funktionsfläche 14. Die beiden Funktionsflächen 13, 14 können in einen ersten Endbereich 24, einen Kontaktbereich 25 und einen zweiten Kontaktbereich 26 unterteilt werden. Dabei erstreckt sich der Kontaktbereich 25 zwischen dem ersten Endbereich 24 und dem zweiten Endbereich 26 und ist rein exemplarisch von einer Vielzahl von Ausnehmungen 27 durchsetzt. Beispielhaft sind die Ausnehmungen 27 in gleicher Teilung längs der längsten Körperachse 15 und in drei Reihen quer zur längsten Körperachse 15 angeordnet und jeweils gleichartig ausgebildet. Die Funktion der Ausnehmungen 27 liegt zum einen in der Gewährleistung einer elastischen Deformierbarkeit des Grundkörpers 2 im Kontaktbereich 25. Ferner gewährleisten die Ausnehmungen 27 eine gute Belichtung und Belüftung des mit der Schutzeinrichtung 1 zu schützenden Bereichs des nicht dargestellten Baums. Bei einer nicht näher dargestellten Variante des Grundkörpers sind Ausnehmungen mit unterschiedlichen Geometrien vorgesehen, um beispielsweise lokal unterschiedliche Deformationseigenschaften für den Grundkörper in Verbindung mit einer vorteilhaften Materialausnutzung zu gewährleisten.

In einer nicht dargestellten Funktionsstellung ist der Grundkörper 2 elastisch zu einer Schlaufe deformiert, wobei sich die beiden Endbereiche 24 und 26 gegenüberliegen und mittels der nachstehend näher beschriebenen Verschlussanordnung und der zugeordneten Aufnahmeanordnung formschlüssig miteinander verriegelt sind.

Der zweite Endbereich 26 ist rein exemplarisch von mehreren, jeweils in gleicher Teilung in Richtung der längsten Körperachse 15, beispielshaft mittig am Grundkörper 2 angeordneten Ausnehmungen 28 durchsetzt, die eine Aufnahmeanordnung 33 bilden und die als Aufnahmen für die nachstehend näher beschriebenen Verschlussmittel dienen. Rein exemplarisch ist vorgesehen, dass an der Rückseite 4 am zweiten Endbereich 26 mehrere Verstärkungsrippen 29 bis 32 ausgebildet sind, die dem zweiten Endbereich 26 gegenüber Biegekräften, die bei einem Verriegelungsvorgang zwischen der Verschlussanordnung und der Aufnahmeanordnung quer zur Rückseite 4 einwirken, stabilisieren.

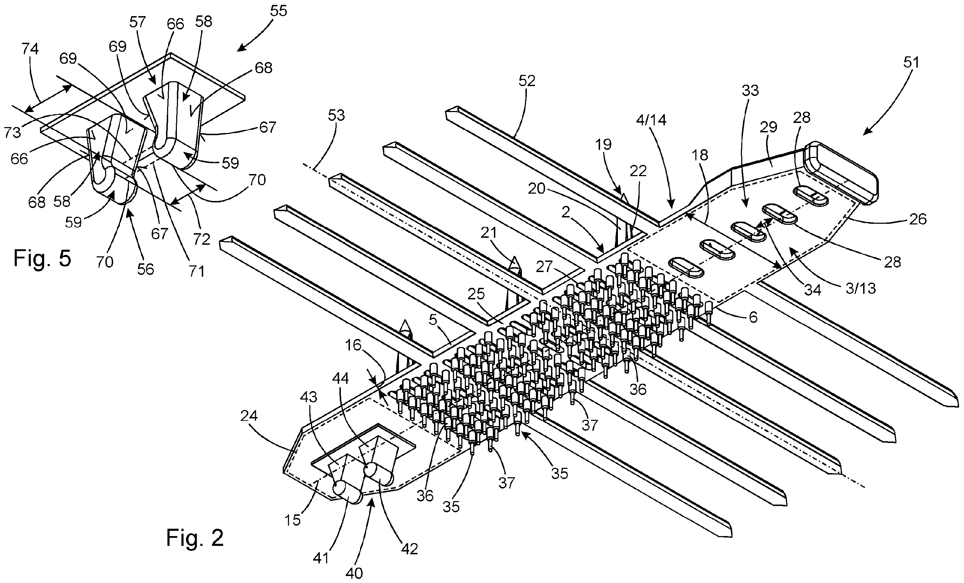

Wie aus der Darstellung der Figur 1 nur andeutungsweise entnommen werden kann, sind an der Vorderseite 3 des Grundkörpers 2 eine Vielzahl von Borsten 35 ausgebildet, die quer zur Vorderseite 3 ausgerichtet sind und die in gleicher Weise bei den nachstehend näher beschriebenen Ausführungsformen gemäß den Figuren 2 bis 4 verwirklicht sind. Diese Borsten 35 dienen einer Abstützung der Schutzeinrichtung 1 an dem zu schützenden Baum und sind zu diesem Zweck zumindest in einem Endbereich mit einem geringen Querschnitt verwirklicht, mit dem eine Flexibilität für die Borsten 35 gewährleistet werden kann, durch die eine Beeinträchtigung des zu schützenden Baums zumindest nahezu vollständig ausgeschlossen werden kann.

Eine in der Figur 1 nicht erkennbare, ebenfalls an der Vorderseite 3 des Grundkörpers 2 am ersten Endbereich 24 angeordnete Verschlussanordnung 40 wird nachstehend im Zusammenhang mit den weiteren Ausführungsformen gemäß den Figuren 2 bis 4 näher beschrieben und ist für eine formschlüssige Kopplung mit den als Aufnahmeanordnung dienenden Ausnehmungen 28 des zweiten Endbereichs 26 ausgebildet.

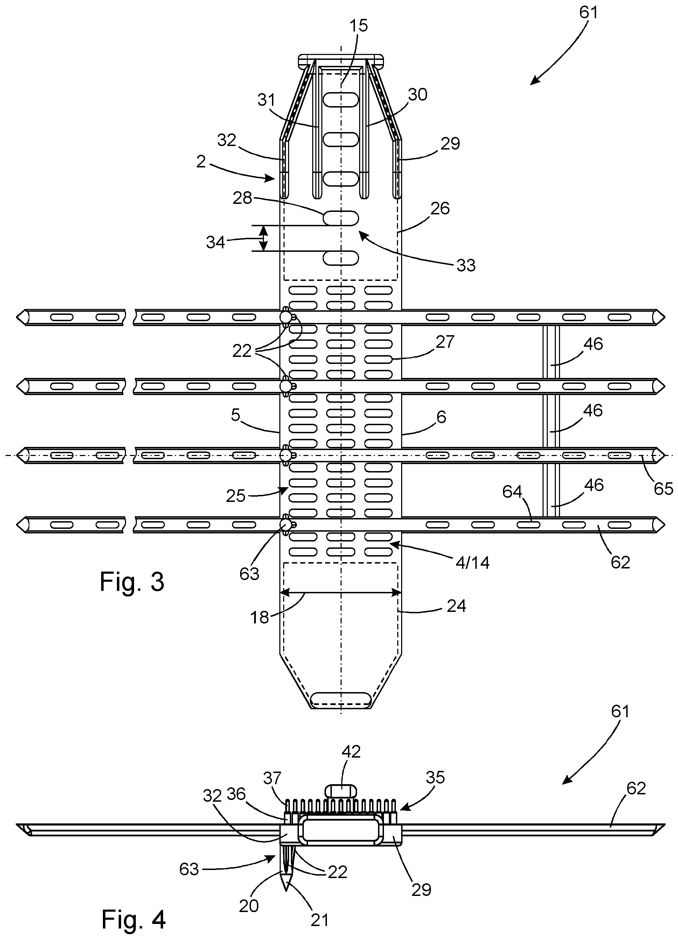

In der Darstellung der Figur 2 ist eine zweite Ausführungsform einer Schutzeinrichtung 51, die nicht erfindungsgemäß ist und der Veranschaulichung dient, dargestellt, die sich ausschließlich durch die Gestaltung der Stützstäbe 52 von der ersten Ausführungsform der Schutzeinrichtung 1 gemäß der Figur 1 unterscheidet. Alle anderen Komponenten der Schutzeinrichtung 51 sind identisch mit der Schutzeinrichtung 1, weshalb die jeweils gleichen Bezugszeichen verwendet werden und auf eine neuerliche Beschreibung dieser Komponenten verzichtet wird. In gleicher Weise gilt dies auch für die nachstehende Beschreibung der in den Figuren 3 und 4 gezeigten erfindungsgemäßen, dritten Ausführungsform einer Schutzeinrichtung 61.

Bei der Schutzeinrichtung 51 gemäß der Figur 2 ist ausschließlich eine einzige Bauform von Stützstäben 52 vorgesehen, die sich mit einer parallel zur Vorderseite 3 und zur Rückseite 4 ausgerichteten Erstreckungsachse 53 ausgehend von der oberen Stirnfläche 5 bzw. der unteren Stirnfläche 6 erstrecken. Beispielhaft ist vorgesehen, dass eine Länge der Stützstäbe 52 ungefähr der doppelten Breite 18 des Grundkörpers 2 entspricht. Durch die beidseitig gleichartige Ausgestaltung der Stützstäbe 52 eignet sich die Schutzeinrichtung 51 insbesondere zum Schutz von Bäumen gegen Wildverbiss.

Aus der Darstellung der Figur 2 ist einerseits die Gestaltung der Borsten 35 erkennbar, andererseits ist der Figur 2 auch die Gestaltung der Verschlussanordnung 40 zu entnehmen. Rein exemplarisch werden die Borsten 35 durch einen von der Vorderseite 3 ausgehenden, kreiszylindrischen Basisabschnitt 36 und einen sich daran anschließenden, ebenfalls kreiszylindrisch ausgebildeten Endbereich 37 gebildet. Dabei sind der Basisabschnitt 36 und der Endbereich 37 koaxial zueinander angeordnet. Beispielhaft ist vorgesehen, dass ein nicht bezeichneter Durchmesser des Endbereichs 37 ungefähr 50 Prozent des nicht bezeichneten Durchmessers des Basisabschnitts 36 beträgt. Ferner ist rein exemplarisch vorgesehen, dass sowohl der Basisabschnitt 36 als auch der Endbereich 37 jeweils eine Länge aufweisen, die ungefähr dem doppelten Abstand 16 zwischen der Vorderseite 3 und der Rückseite 4 des Grundkörpers 2 entspricht.

Am ersten Endbereich 24 des Grundkörpers 2 ist die Verschlussanordnung 40 ausgebildet, die rein exemplarisch ein erstes Verschlussmittel 41 und ein zweites Verschlussmittel 42 umfasst. Jedes der Verschlussmittel 41, 42 ist kreiszylindrisch mit einander entgegengesetzt ausgerichteten halbkugelförmigen Enden ausgebildet und wird von einem zugeordneten ersten Trägerteil 43 bzw. zweiten Trägerteil 44 getragen. Beispielhaft sind die Trägerteile 43, 44 bei Betrachtung quer zur längsten Körperachse 15 mit einer im Wesentlichen dreiecksförmigen Profilierung ausgebildet, die in einer Kontaktzone zu den jeweiligen Verschlussmitteln 41, 42 schmaler als der Durchmesser des jeweiligen Verschlussmitteln 41, 42 gewählt ist. Damit wird eine formschlüssige Verriegelung zwischen den beiden Verschlussmitteln 41, 42 und den Ausnehmungen 28 am zweiten Endbereich 26 dahingehend ermöglicht, dass die Verschlussmittel 41, 42 von einem Benutzer durch die jeweiligen Ausnehmungen 28 unter elastischer Deformation des Grundkörpers 2 hindurch gedrückt werden und anschließend an der Rückseite 4 des Grundkörpers 2 zur Anlage kommen. Solange keine Kräfte auf die Verschlussmittel 41, 42 einwirken, die zu einer neuerlichen elastischen Deformation des Grundkörpers 2 im Bereich der Ausnehmungen 28 am zweiten Endbereich 26 führen, bleibt die Schutzeinrichtung 51 in der nicht dargestellten, schlaufenförmig deformierten Funktionsstellung.

Die in den Figuren 3 und 4 dargestellte erfindungsgemäße, dritte Ausführungsform einer Schutzeinrichtung 61 unterscheidet sich von der zweiten Ausführungsform der Schutzeinrichtung 51 gemäß der Figur 2 durch die Anordnung der formstabilen Stäbe 63, die nur an einer Seite des Grundkörpers 2 angebracht sind. Ferner sind die formstabilen Stäbe 63 bei der dritten Ausführungsform einstückig mit den Stützstäben 62 ausgebildet. Hierdurch kann eine weitere Optimierung für die Herstellung der Schutzeinrichtung 61 im Kunststoffspritzgussverfahren erzielt werden, da die ohnehin notwendige Zuführung von flüssigem Kunststoff zu den Stützstäben 62 zusätzlich zur Zufuhr von flüssigem Kunststoff zu den formstabilen Stäben 63 genutzt werden kann. Darüber hinaus wird durch die Anordnung der formstabilen Stäbe 63 an den Stützstäben 62 eine verbesserte Flexibilität für den Kontaktbereich 25 des Grundkörpers 2 gewährleistet, da die formstabilen Stäbe 63 durch die Anbringung an den Stützstäben 62 vom Grundkörper 2 entkoppelt sind.

Ferner ist bei der dritten Ausführungsform der Schutzeinrichtung 61 vorgesehen, dass die Stützstäbe 62 mit Ausnehmungen 64 versehen sind, die quer zu einer Erstreckungsachse 65 der Stützstäbe 62 ausgerichtet sind. Diese Ausnehmungen 64 führen ohne einen Stabilitätsverlust für die Stützstäbe 62 zu einer Reduktion des zur Herstellung benötigten Kunststoffmaterials.

Rein exemplarisch ist bei allen drei Ausführungsformen der Schutzeinrichtung 1, 51 und 61 vorgesehen, dass die Verschlussanordnung ein erstes Verschlussmittel 41 und ein zweites Verschlussmittel 42 umfasst und dass die Aufnahmeanordnung von mehreren, beispielsweise fünf, Ausnehmungen 28 gebildet wird. Dementsprechend kann eine Verriegelung der jeweiligen Schutzeinrichtung 1, 51 oder 61 an einem nicht dargestellten Baum, insbesondere einem Terminaltrieb eines Nadelbaums, in unterschiedlichen Stellungen der beiden Verschlussmittel 41, 43 gegenüber dem zweiten Endbereich und den darin ausgebildeten Ausnehmungen 28 durchgeführt werden, wobei ein Benutzer die jeweils passende Ausdehnung der dadurch gebildeten Schlinge wählen kann.

Die einseitige Anordnung der formstabilen Stäbe, wie dies von der dritten Ausführungsform der Schutzeinrichtung 61 bekannt ist und/oder die ebenfalls von dieser Schutzeinrichtung 61 bekannten Ausnehmungen in den Stützstäben 62 können in gleicher Form auch bei den anderen Ausführungsformen der Schutzeinrichtungen 1 und 51 verwendet werden.

Bei der in Figur 5 dargestellten alternativen Ausführungsform einer Verschlussanordnung 55, die in gleicher Weise wie die Verschlussanordnung 40 als Bestandteil eines in der Figur 5 nur bereichsweise dargestellten Grundkörpers 2 für eine formschlüssige Verriegelung mit den Ausnehmungen 28 im Grundkörper 2 ausgebildet ist, sind das erste Verschlussmittel 56 und das zweite Verschlussmittel 57 spiegelsymmetrisch gegenüberliegend zueinander angeordnet. Das erste Verschlussmittel 56 weist einen mit zunehmendem Abstand vom Grundkörper 2 verjüngt ausgebildeten Keilabschnitt 58 und einen sich daran anschließenden Rastabschnitt 59 auf. Der Keilabschnitt 58 weist zumindest im Wesentlichen parallel ausgerichtete Seitenwände 66, 67 auf. Ferner weist der Keilabschnitt 58 eine rein exemplarisch eben ausgebildete Rückseite 68 und eine ebenfalls rein exemplarisch eben ausgebildete Vorderseite 69 auf, die mit der Rückseite 68 einen spitzen Winkel einschließt. Entfernt vom Grundkörper 2 schließt sich der Rastabschnitt 59 an den Keilabschnitt 58 an, wobei der Rastabschnitt 59 eine an die Vorderseite 69 angrenzende und über eine von der Vorderseite 69 bestimmte, nicht dargestellte Ebene vorspringende Rastnase 70 aufweist.

Durch die spiegelsymmetrische Anordnung und die gleichartige geometrische Ausgestaltung der beiden Verschlussmittel 56, 57 begrenzen die gegenüberliegenden Rastnasen 70 einen Riegelspalt 71 mit einem Abstand 72 zwischen dem ersten Verschlussmittel 56 und dem zweiten Verschlussmittel 57 sowie einen daran angrenzenden Aufnahmespalt 73 mit einem Abstand 74 zwischen dem ersten Verschlussmittel 56 und dem zweiten Verschlussmittel 57. Dabei ist der Abstand 72 derart bemessen, dass er kleiner als ein in der Figur 3 eingezeichneter Abstand 34 zwischen zwei benachbart angeordneten Ausnehmungen 28 ist und dass bei einer Verriegelung der Verschlussanordnung 55 mit dem Grundkörper 2 ein Montagewiderstand überwunden werden muss, der ein unbeabsichtigtes Entriegeln der Verschlussanordnung 55 vom Grundkörper 2 bei einem bestimmungsgemäßen Gebrauch der Schutzeinrichtung 1 zumindest weitestgehend ausschließt.

Der Abstand 74 entspricht im Wesentlichen dem Abstand 34, so dass die Verschlussanordnung 55 in der Verriegelungsstellung mit dem Grundkörper 2 keine erheblichen inneren Spannungen aufweist, die möglicherweise in Verbindung mit Witterungseinflüssen und Sonneneinstrahlung zu einer unerwünschten Alterung der Verschlussanordnung 55 führen könnten.

## Patentansprüche

1. Schutzeinrichtung (1; 51; 61) für Terminaltriebe von Bäumen, mit einem streifenförmigen Grundkörper (2), der für eine elastische Verformung zwischen einer flächig ausgedehnten Grundstellung und einer gekrümmten Funktionsstellung ausgebildet ist, wobei der Grundkörper (2) eine Vorderseite (3) und eine der Vorderseite (3) abgewandte Rückseite (4) aufweist und an der Vorderseite (3) eine erste Funktionsfläche (13) ausgebildet ist, bei der entlang einer längsten Körperachse (15) des Grundkörpers (2) ein erster Endbereich (24) mit einer Verschlussanordnung (40), ein Kontaktbereich (25) mit einer Vielzahl von flexiblen Borsten (35) und ein zweiter Endbereich (26) mit einer Aufnahmeanordnung (33) zur Verriegelung mit der Verschlussanordnung (40) vorgesehen sind, wobei die Verschlussanordnung (40) ein erstes Verschlussmittel (41) und ein davon beanstandet angeordnetes zweites Verschlussmittel (42) umfasst und wobei die Aufnahmeanordnung (33) eine erste Aufnahme (28) für das erste Verschlussmittel (41) und eine zweite Aufnahme (28) für das zweite Verschlussmittel (42) aufweist, wobei am Grundkörper (2), insbesondere ausschließlich längs des Kontaktbereichs (25), wenigstens zwei Stützstäbe (7, 8, 9; 52; 62) angebracht sind, die jeweils entlang einer parallel zur Vorderseite (3) ausgerichteten Erstreckungsachse (10, 11, 12), insbesondere quer zur längsten Körperachse (15) des Grundkörpers (2), erstreckt sind und wobei die Stützstäbe (62) mehrere jeweils quer zur Erstreckungsachse (65) ausgerichtete und längs der Erstreckungsachse (65), insbesondere in konstanter Teilung angeordnete, Ausnehmungen (64) aufweisen.

2. Schutzeinrichtung (1; 51; 61) nach Anspruch 1, **dadurch gekennzeichnet, dass** an der Rückseite des Grundkörpers (2) eine zweite Funktionsfläche (14) mit formstabilen Stäben (19; 63), insbesondere mit endseitig angespitzten Stacheln, ausgebildet ist, die in einer normal zur zweiten Funktionsfläche (14) ausgerichteten Erstreckungsrichtung abragen

3. Schutzeinrichtung (1; 51; 61) nach Anspruch 2, **dadurch gekennzeichnet, dass** die formstabilen Stäbe (19; 63) angrenzend an eine erste Verbindungsfläche (5, 6), die zwischen der Vorderseite (3) und der Rückseite (4) des Grundkörpers (2) erstreckt ist, angeordnet sind.

4. Schutzeinrichtung (1; 51; 61) nach Anspruch 2 oder 3, **dadurch gekennzeichnet, dass** wenigstens einer der formstabilen Stäbe (63) einstückig mit einem der Stützstäbe ausgebildet ist.

5. Schutzeinrichtung (1; 51; 61) nach einem der vorhergehenden Ansprüche, **dadurch gekennzeichnet, dass** die Borsten (35) einen ersten Zylinderabschnitt (36) mit einem ersten Durchmesser und einer ersten Längenerstreckung und einen daran angrenzenden zweiten Zylinderabschnitt (37) mit einem zweiten Durchmesser und einer ersten zweiten Längenerstreckung aufweisen, wobei der zweite Durchmesser weniger als 60 Prozent des ersten Durchmessers beträgt und/oder wobei die erste Längenerstreckung und die zweite Längenerstreckung jeweils wenigstens das 3-fache des zweiten Durchmessers betragen.

6. Schutzeinrichtung (1; 51; 61) nach einem der vorhergehenden Ansprüche, **dadurch gekennzeichnet, dass** das erste Verschlussmittel (41) und das zweite Verschlussmittel (42) gleichartig ausgebildet sind und dass die Aufnahmeanordnung (33) mehrere gleichartig ausgebildete und mit einheitlicher Teilung entlang der längsten Körperachse (15) des Grundkörpers (2) angeordnete Aufnahmen (28) umfasst, die wahlweise als erste Aufnahme oder als zweite Aufnahme dienen können.

7. Schutzeinrichtung (1; 51; 61) nach Anspruch 6, **dadurch gekennzeichnet, dass** die Aufnahmen (28) als Ausnehmungen ausgebildet sind, die den Grundkörper (2) ausgehend von der Vorderseite (3) bis zur Rückseite (4) durchsetzen und dass das erste Verschlussmittel (41) und das zweite Verschlussmittel (42) in einer parallel zur Rückseite (4) ausgerichteten Projektionsebene jeweils eine Riegelprofilierung aufweisen, die in wenigstens einer Richtung in der Projektionsebene größer als eine Aufnahmeprofilierung der Ausnehmung ausgebildet ist, um eine formschlüssige Verbindung mit der jeweiligen Aufnahme (28) zu bilden.

8. Schutzeinrichtung (1; 51; 61) nach Anspruch 6 oder 7, **dadurch gekennzeichnet, dass** an der Rückseite (4) des Grundkörpers (2) benachbart zu den Aufnahmen (28) wenigstens eine leistenförmige, vorzugsweise längs der längsten Körperachse (15) des Grundkörpers (2) erstreckte Verstärkung (29, 30, 31, 32) ausgebildet ist.

9. Schutzeinrichtung (1; 51; 61) nach einem der vorhergehenden Ansprüche, **dadurch gekennzeichnet, dass** der Grundkörper (2) im Kontaktbereich (25) eine Vielzahl von Ausnehmungen (27) aufweist, die sich von der Vorderseite (3) zur Rückseite (4) erstrecken.

## Claims

1. Protective device (1; 51; 61) for terminal sprouts of trees, having a strip-shaped base body (2) which is designed for elastic deformation between a flatly extended basic position and a curved functional position, the base body (2) having a front side (3) and a rear side (4) facing away from the front side (3), and having a first functional surface (13) being formed on the front side (3), in which, along a longest body axis (15) of the base body (2), a first end region (24) with a locking arrangement (40), a contact region (25)with a plurality of flexible bristles (35), and a second end region (26) with a receiving arrangement (33) for locking to the locking arrangement (40) are formed, , wherein the closure arrangement (40) comprises a first closure means (41) and a second closure means (42) arranged spaced therefrom, and wherein the receiving arrangement (33) has a first receiving means (28) for the first closure means (41) and a second receiving means (28) for the second closure means (42), wherein at least two support rods (7, 8, 9; 52; 62) are fitted, which are each extended along an extension axis (10, 11, 12) aligned parallel to the front side (3), in particular transversely to the longest body axis (15) of the base body (2), and the support rods (62) having a plurality of recesses (64) which are each aligned transversely to the extension axis (65) and are arranged along the extension axis (65), in particular at a constant pitch.

2. Protective device (1; 51; 61) according to claim 1, **characterized in that** a second functional surface (14) is formed on the rear side of the base body (2) which comprises dimensionally stable rods (19; 63), in particular with spikes sharpened at the ends, which spikes project in an extension direction aligned perpendicularly to the second functional surface (14).

3. Protective device (1; 51; 61) according to claim 2, **characterized in that** the dimensionally stable rods (19; 63) are arranged adjacent to a first connecting surface (5, 6) extending between the front side (3) and the rear side (4) of the base body (2).

4. Protective device (1; 51; 61) according to claim 2 or 3, **characterized in that** at least one of the dimensionally stable rods (63) is formed integrally with one of the support rods.

5. Protective device (1; 51; 61) according to one of the preceding claims, **characterized in that** the bristles (35) have a first cylindrical section (36) with a first diameter and a first longitudinal extent and an adjoining second cylindrical section (37) with a second diameter and a second longitudinal extent, the second diameter being less than 60 percent of the first diameter and/or the first longitudinal extent and the second longitudinal extent each being at least 3 times the second diameter.

6. Protective device (1; 51; 61) according to one of the preceding claims, **characterized in that** the first closure means (41) and the second closure means (42) are of identical design, and **in that** the receiving arrangement (33) comprises a plurality of receptacles (28) which are of identical design and are arranged with uniform pitch along the longest body axis (15) of the base body (2) and which can optionally serve as a first receptacle or as a second receptacle.

7. Protective device (1; 51; 61) according to claim 6, **characterized in that** the receptacles (28) are designed as recesses which pass through the base body (2) starting from the front side (3) to the rear side (4), and **in that** the first closure means (41) and the second closure means (42) each have, in a projection plane aligned parallel to the rear side (4), a bolt profiling which is designed to be larger in at least one direction in the projection plane than a receptacle profiling of the recess, in order to form a form-fitting connection with the respective receptacle (28).

8. Protective device (1; 51; 61) according to claim 6 or 7, **characterized in that** at least one strip-shaped reinforcement (29, 30, 31, 32), preferably extending along the longest body axis (15) of the base body (2), is formed on the rear side (4) of the base body (2) adjacent to the receptacles (28).

9. Protective device (1; 51; 61) according to one of the preceding claims, **characterized in that** the base body (2) has in the contact region (25) a plurality of recesses (27) which extend from the front side (3) to the rear side (4).

## Revendications

1. Dispositif de protection (1 ; 51 ; 61) de pousses terminales d'arbres, avec un corps de base en forme de bande (2), qui est réalisé pour une déformation élastique entre une position de base à surface étendue et une position fonctionnelle incurvée, dans lequel le corps de base (2) présente un côté avant (3) et un côté arrière (4) opposé au côté avant (3) et une première surface fonctionnelle (13) est réalisée sur le côté avant (3), où sont prévues, le long d'un axe de corps le plus long (15) du corps de base (2), une première zone d'extrémité (24) avec un ensemble de fermeture (40), une zone de contact (25) avec une pluralité de poils flexibles (35) et une deuxième zone d'extrémité (26) avec un ensemble de logement (33) destinés à être verrouillés à l'ensemble de fermeture (40), dans lequel l'ensemble de fermeture (40) comprend un premier moyen de fermeture (41) et un deuxième moyen de fermeture (42) disposé à distance de celui-ci et dans lequel l'ensemble de logement (33) présente un premier logement (28) pour le premier moyen de fermeture (41) et un deuxième logement (28) pour le deuxième moyen de fermeture (42), dans lequel sont installées sur le corps de base (2), en particulier exclusivement le long de la zone de contact (25), au moins deux barres de support (7, 8, 9 ; 52 ; 62), qui s'étendent respectivement le long d'un axe d'extension (10, 11, 12), orienté de manière parallèle au côté avant (3), en particulier de manière transversale par rapport à l'axe de corps le plus long (15) du corps de base (2), et dans lequel les barres de support (62) présentent plusieurs évidements (64) orientés respectivement de manière transversale par rapport à l'axe d'extension (65) et disposés le long de l'axe d'extension (65), en particulier selon une répartition constante.

2. Dispositif de protection (1 ; 51 ; 61) selon la revendication 1, **caractérisé en ce qu'**est réalisée, sur le côté arrière du corps de base (2), une deuxième surface fonctionnelle (14) avec des barres à forme stable (19 ; 63), en particulier avec des aiguillons taillés côté extrémité, qui dépassent dans une direction d'extension orientée de manière normale par rapport à la deuxième surface fonctionnelle (14).

3. Dispositif de protection (1 ; 51 ; 61) selon la revendication 2, **caractérisé en ce que** les barres à forme stable (19 ; 63) sont disposées de manière à jouxter une première surface de liaison (5, 6), qui s'étend entre le côté avant (3) et le côté arrière (4) du corps de base (2).

4. Dispositif de protection (1 ; 51 ; 61) selon la revendication 2 ou 3, **caractérisé en ce qu'**au moins une des barres à forme stable (63) est réalisée d'un seul tenant avec une des barres de support.

5. Dispositif de protection (1 ; 51 ; 61) selon l'une quelconque des revendications précédentes, **caractérisé en ce que** les poils (35) présentent une première section cylindrique (36) avec un premier diamètre et une première extension longitudinale et une deuxième section cylindrique (37) jouxtant la première avec un deuxième diamètre et une première deuxième extension longitudinale, dans lequel le deuxième diamètre représente moins de 60 pourcent du premier diamètre et/ou dans lequel la première extension longitudinale et la deuxième extension longitudinale représentent respectivement au moins 3 fois le deuxième diamètre.

6. Dispositif de protection (1 ; 51 ; 61) selon l'une quelconque des revendications précédentes, **caractérisé en ce que** le premier moyen de fermeture (41) et le deuxième moyen de fermeture (42) sont réalisés de manière similaire et que l'ensemble de logement (33) comprend plusieurs logements (28) réalisés de manière similaire et disposés selon une répartition uniforme le long du premier axe de corps le plus long (15) du corps de base (2), qui peuvent faire office au choix de premier logement ou de deuxième logement.

7. Dispositif de protection (1 ; 51 ; 61) selon la revendication 6, **caractérisé en ce que** les logements (28) sont réalisés en tant qu'évidements, qui traversent le corps de base (2) en partant du côté avant (3) jusqu'au côté arrière (4), et que le premier moyen de fermeture (41) et le deuxième moyen de fermeture (42) présentent dans un plan de projection orienté de manière parallèle par rapport au côté arrière (4) respectivement un profilage de verrou, qui est plus grand dans au moins une direction dans le plan de projection qu'un profilage de logement de l'évidement pour former une liaison à complémentarité de forme avec le logement (28) respectif.

8. Dispositif de protection (1 ; 51 ; 61) selon la revendication 6 ou 7,
**caractérisé en ce qu'**au moins un renforcement (29, 30, 31, 32) en forme de baguette, s'étendant de préférence le long de l'axe de corps le plus long (15) du corps de base (2) est réalisé sur le côté arrière (4) du corps de base (2) de manière adjacente aux logements (28).

9. Dispositif de protection (1 ; 51 ; 61) selon l'une quelconque des revendications précédentes, **caractérisé en ce que** le corps de base (2) présente, dans la zone de contact (25), une pluralité d'évidements (27), qui s'étendent depuis le côté avant (3) vers le côté arrière (4).
